(19) Europäisches Patentamt
European Patent Office
Office européen des brevets

(11) **EP 1 101 675 B1**

(12) **EUROPÄISCHE PATENTSCHRIFT**

(45) Veröffentlichungstag und Bekanntmachung des Hinweises auf die Patenterteilung:
**07.07.2010   Patentblatt 2010/27**

(51) Int Cl.:
***B60T 8/1764*** *(2006.01)*

(21) Anmeldenummer: **00117765.8**

(22) Anmeldetag: **18.08.2000**

(54) **Verfahren und Vorrichtung zur Einstellung der Bremswirkung bei einem Kraftfahrzeug**

Process and device for adjusting the braking effect in a vehicle

Procédé et dispositif d'ajustement de l'effet de freinage dans un véhicule

(84) Benannte Vertragsstaaten:
**DE ES FR GB**

(30) Priorität: **17.11.1999   DE 19955243**

(43) Veröffentlichungstag der Anmeldung:
**23.05.2001   Patentblatt 2001/21**

(73) Patentinhaber: **ROBERT BOSCH GMBH
70442 Stuttgart (DE)**

(72) Erfinder:
• **Poggenburg, Rüdiger
  71665 Vaihingen/Enz (DE)**
• **Diehle, Stefan
  70825 Korntal-Muenchingen (DE)**
• **Sonntag, Eberhard
  71739 Oberriexingen (DE)**

(56) Entgegenhaltungen:
**EP-A- 0 878 367     DE-C- 4 410 937
GB-A- 2 307 526     US-A- 4 637 664
US-A- 4 893 880**

EP 1 101 675 B1

**Beschreibung**

Stand der Technik

Die Erfindung geht aus von einem Verfahren bzw. einer Vorrichtung zur Einstellung der Bremswirkung bei einem Kraftfahrzeug mit den Merkmalen der Oberbegriffe der unabhängigen Ansprüche.

Aus dem Stand der Technik sind vielerlei Möglichkeiten bekannt, die Blockierneigung eines gebremsten Rades entgegenzuwirken, indem man beispielsweise im Sinne einer Individualregelung die Bremskraft an jedem Rad derart einstellt, daß ein bestimmter Bremsschlupf eingehalten wird. Hierdurch gelangt man zu einer Bremsmomentenbegrenzung. Weiterhin ist es bekannt, der Blockierneigung eines gebremsten Rades dadurch entgegenzuwirken, daß im Rahmen einer Instabilitätsregelung ein Instabilitätswert wenigstens abhängig von dem Bremsschlupf und der Radverzögerung gebildet wird und dieser Instabilitätswert mit einem vorgebbaren Schwellenwert verglichen wird.

Wird nun ein Fahrzeug mit einem solchen Bremssystem auf einer Fahrbahn gebremst, die derart beschaffen ist, daß auf der einen Fahrzeugseite ein hoher Reibbeiwert und auf der anderen Fahrzeugseite ein niedriger Reibbeiwert vorhanden ist, so können die unterschiedlich großen Bremskräfte Giermomente hervorrufen. Zur Vermeidung bzw. Abschwächung dieses Effekts ist aus dem Stand der Technik eine Vielzahl von Möglichkeiten bekannt, den Giermomentenaufbau zu verringern bzw. zeitlich zu verzögern.

Die obengenannte Bedingung, daß auf den beiden Fahrzeugseiten deutlich unterschiedliche Reibbeiwertverhältnisse herrschen bezeichnet man im allgemeinen als μ-Split-Bedingung. Beim Bremsen unter einer solchen μ-Split-Bedingung wirken an den Vorderrädern des Fahrzeugs je nach Reibwertunterschieden zwischen der linken und der rechten Fahrzeugseite unterschiedliche Bremskräfte, die ein Drehmoment um die Fahrzeughochachse, das Giermoment, verursachen. Das Problem ist die Höhe und der schnelle Anstieg des Giermoments. Durch die Giermomentenaufbauverzögerung wird der Anstieg des Bremsdrucks auf der Hochreibwertseite des Fahrzeugs verzögert, wodurch dem Fahrer die Möglichkeit gegeben wird, den nun langsameren Anstieg des Giermoments durch eine entsprechende Lenkwinkelkorrektur entgegenzuwirken. Aus dem Stand der Technik ist beispielsweise die sogenannten select-Low-Regelung an der Hinterachse des Fahrzeugs bekannt, hierbei werden beide Hinterräder nach dem instabilen Hinterrad, also dem Rad auf der Niedrigreibwertseite, geregelt. Dadurch ist das Hinterrad auf der Hochreibwertseite weit unterbremst und kann als sogenanntes Peißler-Rad (freilaufendes Rad) zur Ermittlung der Fahrzeuglängsgeschwindigkeit, der sogenannten Fahrzeugreferenzgeschwindigkeit, herangezogen werden. Über dieses quasi freilaufende Rad wird somit die Geschwindigkeitsreferenz gestützt.

Insbesondere bei Fahrzeugen mit einem großen Beladungsunterschied auf der Hinterachse, beispielsweise Nutzkraftfahrzeugen, bedeutet die select-Low-Regelung an der Hinterachse einen einen relativ langen Bremsweg. Deshalb wird bei solchen Fahrzeugen eine Individualregelung an der Vorder- und Hinterachse durchgeführt. Dies bedeutet, daß die Bremswirkung an jedem einzelnen Rad des Fahrzeugs unabhängig von den dynamischen Zuständen an den anderen Rädern eingestellt wird. Insbesondere ist dabei vorgesehen, daß zumindest die Räder auf der Hochreibwertseite auf einen bestimmten Bremsschlupf eingestellt werden. Zur Ermittlung des Bremsschlupfes benötigt man jedoch als stabile Führungsgröße einen verläßlichen Wert für die Fahrzeugreferenzgeschwindigkeit.

Aus der US 4,637,664 A ist ein Antiblockiersystem bekannt, bei dem unterschiedliche Regelungsstrategien für einheitliche Reibungskoeffizienten an den Rädern sowie für den sogenannten μ-Split Fall vorgesehen sind. So findet bei einheitlichen Reibungskoeffizienten eine normale Antiblockierregelung statt. Bei der Erkennung einer μ-Split Situation werden die Bremsen an beiden Hinterrädern in Abhängigkeit von der Bremskraft des Vorderrades gesteuert, welches den niedrigsten Reibungskoeffizienten aufweist.

Die Aufgabe der vorliegenden Erfindung besteht darin, durch die Einstellung der Bremswirkung an den Rädern eine stabile Führungsgröße zur Giermomentenaufbauverzögerung zu erlangen, ohne unnötig lange Bremswege in Kauf nehmen zu müssen.

Diese Aufgabe wird durch die kennzeichnenden Merkmale der unabhängigen Ansprüche gelöst.

Vorteile der Erfindung

Die Erfindung geht aus von einem Verfahren bzw. einer Vorrichtung zur Einstellung der Bremswirkung an den Rädern eines Kraftfahrzeugs, wobei das Kraftfahrzeug wenigstens eine Hinterachse und eine Vorderachse aufweist. Zur Einstellung der Bremswirkung werden die Bremseinrichtungen der Räder entsprechend angesteuert. Es werden Drehzahlgrößen, die die Drehbewegungen der Räder repräsentieren, erfaßt. Abhängig von diesen erfaßten Drehzahlgrößen werden Ansteuersignale zur Ansteuerung der Radbremsen wenigstens im Sinne einer Erhöhung oder einer Erniedrigung der Bremswirkung ermittelt. Weiterhin wird wenigstens abhängig von der erfaßten Drehzahlgrößen als sogenannte μ-Split-Situation die Situation erfaßt, in der an den rechten und linken Rädern des Fahrzeugs in bestimmter Weise unterschiedliche Reibwerte vorliegen. Wie erwähnt, werden die Räder, die sich auf der Fahrbahn mit dem niedrigerem Reibwert befinden, als Low-Räder bezeichnet, während die Räder, die sich auf der Fahrbahnseite mit dem höheren Reibwert befinden, als High-Räder benannt werden.

Der Kern der Erfindung besteht darin, daß in dem Falle einer μ-Split-Situation die Ansteuerung der Bremseinrichtungen des Low-Rades an der Hinterachse derart geschieht, daß die Erniedrigung der Bremswirkung an dem Low-Rad an der Hinterachse abhängig von der Erniedrigung der Bremswirkung an dem seitengleichen Rad an der Vorderachse getätigt wird. Alternativ hierzu ist vorgesehen, daß an dem Low-Rad an der Hinterachse im wesentlichen keine Bremswirkung eingestellt wird.

Gemäß der ersten Erfindungsvariante wird also die Erniedrigungen der Bremswirkung, im allgemeinen der Bremsdruckabbau, am Low-Vorderrad auf das seitengleiche Low-Hinterrad kopiert. Dadurch wird das Low-Hinterrad auf der Niedrigreibwertseite, das im allgemeinen nicht wesentlich zur Bremsleistung bzw. Fahrzeugverzögerung beiträgt, unterbremst und kann somit als Führungsgröße bzw. als Geschwindigkeits-referenz dienen.

Gemäß der zweiten Erfindungsvariante wird an dem LowHinterrad erst gar keine nennenswerte Bremswirkung eingestellt. Auch hierdurch kann das Low-Hinterrad auf der Niedrigreibwertseite zur Stützung der Fahrzeugreferenzgeschwindigkeit dienen. Die zweite Erfindungsvariante hat jedoch gegenüber der ersten Erfindungsvariante den Nachteil, daß bei einer Änderung des Reibwertes auf der Low-Seite das Low-Rad an der Hinterachse gemäß der ersten Erfindungsvariante zur Fahrzeugverzögerung beiträgt, während das Low-Rad an der Hinterachse gemäß der zweiten Erfindungsvariante weiterhin bremswirkungslos bleibt.

Erfindungsgemäß ist vorgesehen, daß im Falle einer µ-Split-Situation die Ansteuerung der Bremseinrichtungen an den High-Rädern der Vorder-und Hinterachse derart geschieht, daß ein vorgegebener Bremsschlupf eingestellt wird. Bei dieser sogenannten Individualregelung ist insbesondere vorgesehen, daß der Bremsschlupf abhängig von den Drehzahlgrößen gebildet wird und der Bremsschlupf mit einem Schwellenwert verglichen wird. Die Ansteuerung der Bremseinrichtung der High-Räder wird dann abhängig von dem Vergleich getätigt.

In einer vorteilhaften Ausgestaltung ist vorgesehen, daß zur Einstellung des Bremsschlupfes wenigstens der Bremsschlupf an den High-Rädern der Vorder- und Hinterachse abhängig von der Drehzahlgröße, die die Drehbewegungen des Low-Rades an der Hinterachse repräsentiert, ermittelt wird. Insbesondere ist dabei vorgesehen, daß die Drehzahlgröße, die die Drehbewegungen des Low-Rades an der Hinterachse repräsentiert, bei der Ermittlung des Bremsschlupfes als Fahrzeuggeschwindigkeit bzw. Fahrzeugreferenzgeschwindigkeit herangezogen wird.

Im allgemeinen wird bei Personenkraftwagen an der Vorderachse eine Individualregelung und an der Hinterachse eine select-Low-Regelung gewählt. Dem gegenüber wird bei Lastwagen in der Regel an der Vorderachse eine select-Low-Regelung und an der Hinterachse eine Individualregelung vorgesehen. Die Individualregelung von Hinter- und Vorderachse führt insbesondere bei leichten Nutzfahrzeugen und bei Bremsungen unter einer µ-Split-Situation zur kürzeren Bremswegen. Da diese Fahrzeuge sich von der Gewichtsverteilung zwischen einem Personen- und Lastkraftwagen einordnen.

Durch die erfindungsgemäße Bereitstellung einer Führungsgröße nach dem obengenannten Prinzip für die schlupfgeregelte Giermomentenaufbauverzögerung ist es somit möglich, zusätzlich über die gesamte Bremsung hinweg ein stabiles Fahrzeug zu gewährleisten.

Vorteilhaft ist es, daß im Falle einer µ-Split-Situation die Ansteuerung der Bremseinrichtungen des Low-Rades an der Vorderachse derart geschieht, daß ein Blockieren dieses Rades verhindert wird. Hierbei ist, wie schon eingangs erwähnt, insbesondere vorgesehen, daß ein die Dynamik dieses Rades repräsentierender Instabilitätswert wenigstens abhängig von den Drehzahlgrößen gebildet wird. Dieser Instabilitätswert wird mit einem Schwellenwert verglichen, woraufhin die Ansteuerung der Bremseinrichtung dieses Rades abhängig von dem Vergleich getätigt wird.

Die Einstellung der Bremswirkung kann durch eine Einstellung eines hydraulischen Bremsdrucks geschehen. Die Erhöhung und die Erniedrigung der Bremswirkung wird in diesem Falle dadurch erzielt, daß durch entsprechende Ansteuerung von Bremsdruckventilen der Bremsdruck in den Bremseinrichtungen der Räder erhöht bzw. erniedrigt wird. Daneben kann selbstverständlich auch ein Konstanthalten des Bremsdrucks vorgesehen sein. Hierbei ist insbesondere vorgesehen, daß die Ansteuerungen die Zeitdauer eines Bremsdruckaufbaus und eines Bremsdruckabbaus repräsentieren.

Wird eine µ-Split-Situation erkannt, so geschieht erfindungsgemäß die Ansteuerung der Bremseinrichtungen des Low-Rades an der Hinterachse derart, daß die Zeitdauer des Bremsdruckabbaus an diesem Rad abhängig von der Zeitdauer des Bremsdruckabbaus an dem seitengleichen Vorderrad getätigt wird.

Weitere vorteilhafte Ausgestaltungen sind den Unteransprüchen zu entnehmen.

Zeichnung

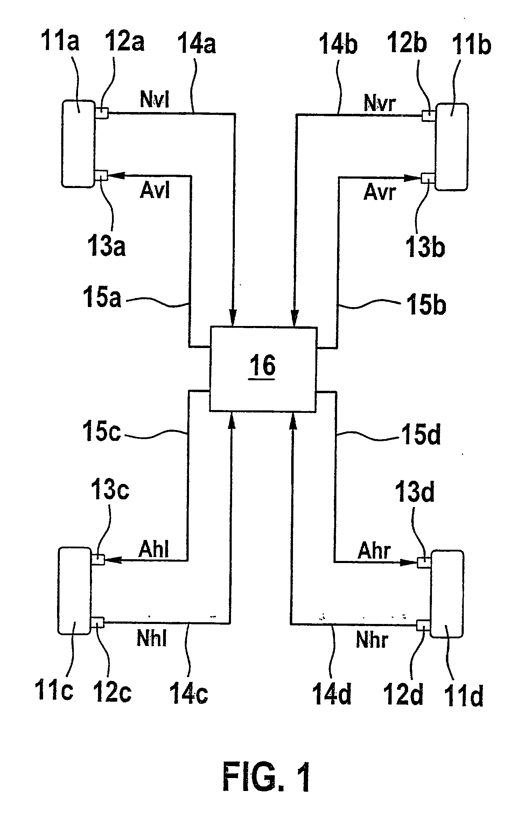

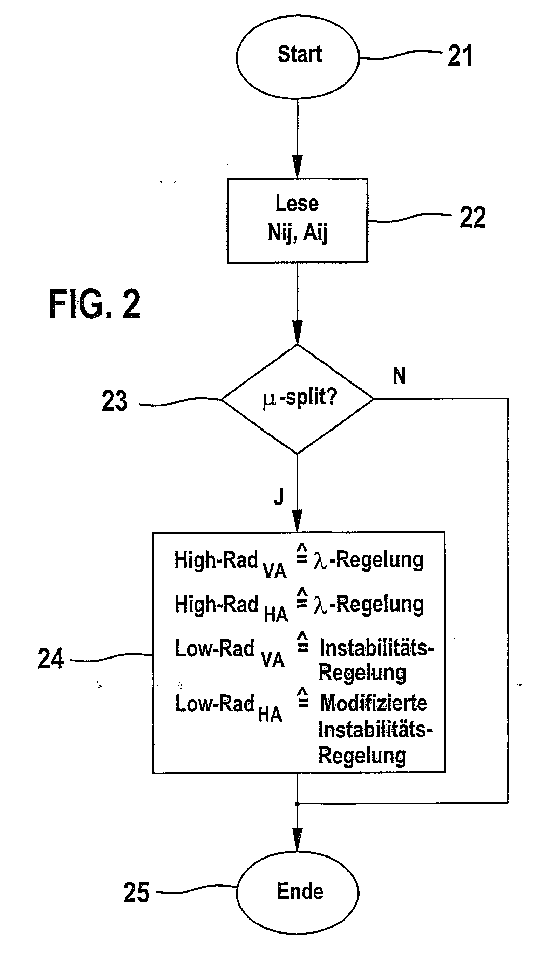

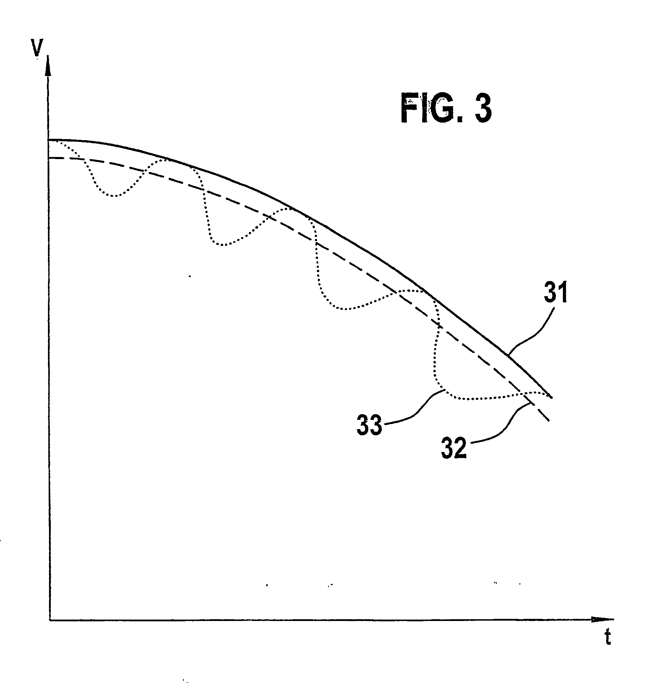

Die Figur 1 zeigt schematisch das Bremssystem des Fahrzeugs. Die Figur 2 stellt den Ablauf des Ausführungsbeispiels der Erfindung dar, während die Figur 3 den zeitlichen Verlauf einzelner Radgeschwindigkeiten bzw. der Fahrzeuggeschwindigkeit offenbart.

Ausführungsbeispiel

Die Erfindung wird im folgenden anhand eines Ausführungsbeispiels dargestellt. Die Figur 1 zeigt mit dem Bezugszeichen lla bis d vier Räder eines zweiachsigen Fahrzeugs, wobei jedes Rad einen mit dem Bezugszeichen 12a bis d gekennzeichneten Raddrehzahlsensor aufweist. Die Raddrehzahlen Nij werden durch Leitungen 14a bis d der Auswerteeinheit 16 zugeführt. Der Index i bezeichnet dabei die Zugehörigkeit der entsprechenden Größe zur Vorder-(i = v) bzw. zur Hinterachse (i = h). Der Index j repräsentiert die Zugehörigkeit der entsprechenden Größe zur rechten (j = r) bzw. zur linken (j = l) Fahrzeugseite.

Jedem Rad 11a bis d sind Radbremsen 13a bis d zugeordnet, deren Bremskraft bzw. Bremswirkung durch die Leitungen 15a bis d von der Auswerteeinheit 16 gesteuert wird. Hierzu dienen die Ansteuersignale Aij. Nicht dargestellt ist in der Figur 1 das vom Fahrer betätigte Bremspedal, durch das der Fahrer einen Verzögerungswunsch bestimmten Ausmaßes vorgibt. Zusammenfassend ist zu bemerken, daß die Figur 1 schematisch ein Bremssystem zeigt, daß an einzelnen Radbremsen die Bremswirkung unabhängig vom Fahrer variieren kann.

Anhand der Figur 2 wird nun ein beispielshafter Ablauf, wie er in der Auswerteeinheit 16 abläuft, dargestellt.

Nach dem Startschritt 21 werden im Schritt 22 die Raddrehzahlen Nij sowie die Ansteuersignale Aij eingelesen.

Im Schritt 23 wird abgefragt, ob die oben beschrieben μ-Split-Fahrsituation vorliegt. Eine μ-Split-Fahrsituation kann beispielsweise dadurch erkannt werden, daß sich nur eines der Fahrzeugräder in einer Instabilitätsregelung befindet. Hierzu ist allerdings zu unterscheiden, ob sich das Fahrzeug in einer Kurvenfahrt befindet oder sich im wesentlichen geradeaus bewegt. Diese Kurvenerkennung kann beispielsweise durch die gefilterte Differenz der Drehzahlen auf der rechten und linken Fahrzeugseite geschehen. Eine μ-Split-Situation während einer Kurvenfahrt kann beispielsweise dadurch erkannt werden, daß das kurvenäußere Rad, das im allgemeinen höher belastet ist, als das kurveninnere Rad, zuerst in eine Instabilitätsregelung gelangt. Gelangt jedoch das kurveninnere Rad zuerst in eine Instabilitätsregelung, so ist aus fahrdynamischen Gründen im allgemeinen kein Eingriff durch eine spezielle μ-Split-Bremsregelung erforderlich. In diesem Fall wird direkt zum Endschritt 25 übergegangen.

Liegt jedoch eine μ-Split-Situation vor, so werden im Schritt 24 -verschiedene Maßnahmen an den einzelnen Fahrzeugrädern eingeleitet.

An den High-Rädern der Vorder- und Hinterachse wird die eingangs erwähnte Schlupfregelung (λ-Regelung) gewählt. Hierbei wird der Bremsschlupf λ an den High-Rädern beispielsweise auf 1 bis 5 % eingestellt. Das Rad wird dann nicht über das Maximum der μ-Schlupf Kurve geregelt.

Der Bremsschlupf an dem Rad ij ist im allgemeinen definiert als

$$\lambda ij = (Vref - Nij)/Vref,$$

wobei Vref die Fahrzeugreferenzgeschwindigkeit ist, die die Fahrzeuglängsgeschwindigkeit repräsentiert.

Am Low-Rad der Vorderachse wird eine Instabilitätsregelung vorgenommen, was bedeutet, daß im wesentlichen aufgrund der Radverzögerung und des Bremsschlupfes eine Blockierneigung auf der Niedrig-μ-Seite verhindert wird. Hier wird das Rad über das Maximum der μ-Schlupf Kurve geregelt.

Der Kern der Erfindung besteht darin, daß an dem Low-Rad der Hinterachse zunächst auch eine Instabilitätsregelung vorgenommen wird, die jedoch derart modifiziert wird, daß die Bremsdruckabbauten des Low-Rades an der Vorderachse auch am Low-Rad der Hinterachse durchgeführt werden.

Als Fahrzeugreferenzgeschwindigkeit Vref, die wesentlich für die Schlupfbestimmung ist, wird während der im Schritt 24 gezeigten Regelung im wesentlichen die Raddrehzahl des Low-Rades an der Hinterachse benutzt.

Nach dem Endschritt 25 wird der in der Figur 2 gezeigte Ablauf erneut durchlaufen.

Die Figur 3 zeigt zunächst den zeitlichen Verlauf 31 der Fahrzeuglängsgeschwindigkeit bzw. der Fahrzeugreferenzgeschwindigkeit. Mit dem Bezugszeichen 32 sind die Raddrehgeschwindigkeiten der High-Räder an der Vorder- und Hinterachse eingezeichnet. Durch den im wesentlichen konstanten Abstand zur Fahrzeugreferenzgeschwindigkeit 31 erkennt man, daß die High-Räder der Vorder- und Hinterachse in einer Schlupfregelung betrieben werden. Wie schon zum Schritt 24 der Figur 2 erwähnt, wird die Bremswirkung an diesen Rädern derart eingestellt, daß ein Bremsschlupf von ca. 1 % bis 5 % vorliegt. Die Schlupfschwelle muß dabei über die Dauer der Bremsung nicht konstant sein.

Mit dem Bezugszeichen 33 ist die Raddrehgeschwindigkeit des Low-Rades an der Vorderachse gezeigt. Man erkennt, daß dieses Low-Rad an der Vorderachse bis an die Instabilitätsgrenze herangeführt wird und durch einen Abbau der Bremswirkung die Raddrehgeschwindigkeit des Low-Rades an der Vorderachse wieder bis zur Fahrzeugreferenzgeschwindigkeit herangeführt wird. Die Erfindung besteht nun darin, daß die Bremswirkungsabbauten am Low-Rad der Vorderachse ebenfalls bremswirkungsabbauend an dem Low-Rad der Hinterachse wirkt. Somit wird das Low-Rad an der Hinterachse derart unterbremst, daß die Drehgeschwindigkeit des Low-Rades an der Hinterachse als Fahrzeugreferenzgeschwindigkeit herangezogen werden kann, was die Schlupfregelung an den High-Rädern der Vorder- und Hinterachse vorteilhaft beeinflußt.

**Patentansprüche**

1. Verfahren zur Einstellung der Bremswirkung an den Rädern eines Kraftfahrzeugs mit wenigstens einer Hinterachse und einer Vorderachse und jeweils zwei bzgl. der Fahrtrichtung rechts und links angeordneten Rädern (11a-d), denen jeweils eine Bremseinrichtung (13a-d) zur Aufbringung einer Bremswirkung an dem Rad zugeordnet ist, wobei

- Drehzahlgrößen (Nij), die die Drehbewegungen der Räder repräsentieren, erfaßt werden,
- wenigstens abhängig von den erfaßten Drehzahlgrößen (Nij) Ansteuersignale (Aji) zur Ansteuerung der Bremseinrichtungen (13a-d) wenigstens im Sinne einer Erhöhung und einer Erniedrigung der Bremswirkung ermittelt werden, und
- eine vorgebbare Situation ($\mu_{split}$) wenigstens abhängig von den erfaßten Drehzahlgrößen (Nij) dann erfaßt wird, wenn an den rechten und linken Rädern in bestimmter Weise unterschiedliche Reibwerte vorliegen,

**dadurch gekennzeichnet, dass** dann, wenn die vorgebbare Situation ($\mu_{split}$) erfaßt wird,

- die Ansteuerung (Aij) der Bremseinrichtungen (13a-d) des Rades (Low-Rad) an der Hinterachse, an dem der geringere Reibwert vorliegt, derart geschieht, daß

     o die Erniedrigung der Bremswirkung an diesem Rad (Low-Rad) an der Hinterachse abhängig von der Erniedrigung der Bremswirkung an dem seitengleichen Rad an der Vorderachse getätigt wird, oder
     o an diesem Rad (Low-Rad) an der Hinterachse keine Bremswirkung eingestellt wird, und

- die Ansteuerung (Aij) der Bremseinrichtungen (13a-d) der Räder (High-Räder) an der Vorder- und Hinterachse, an denen der größere Reibwert vorliegt, derart geschieht, daß ein vorgegebener Bremsschlupf eingestellt wird, wobei insbesondere vorgesehen ist, daß der Bremsschlupf abhängig von den Drehzahlgrößen gebildet wird und der Bremsschlupf mit einem Schwellenwert verglichen wird und die Ansteuerung der Bremseinrichtung dieser Räder (High-Räder) abhängig von dem Vergleich getätigt wird.

2. Verfahren nach Anspruch 1, **dadurch gekennzeichnet, daß** zur Einstellung des Bremsschlupfes wenigstens der Bremsschlupf an diesen Rädern (High-Rädern) der Vorder- und Hinterachse abhängig von der Drehzahlgröße, die die Drehbewegungen des Rades (Low-Rades) an der Hinterachse mit dem geringeren Reibwert repräsentiert, ermittelt wird, wobei insbesondere vorgesehen ist, daß die Drehzahlgröße, die die Drehbewegungen des Rades (Low-Rades) an der Hinterachse mit dem geringeren Reibwert repräsentiert, bei der Ermittlung des Bremsschlupfes als Fahrzeuggeschwindigkeit beziehungsweise Fahrzeugreferenzgeschwindigkeit herangezogen wird.

3. Verfahren nach Anspruch 1, **dadurch gekennzeichnet, daß** dann, wenn die vorgebbare Situation ($\mu_{split}$) erfaßt wird, die Ansteuerung (Aij) der Bremseinrichtungen (13a-d) des Rades (Low-Rades) an der Vorderachse mit dem geringeren Reibwert derart geschieht, daß ein Blockieren dieses Rades verhindert wird, wobei insbesondere vorgesehen ist, daß ein die Dynamik dieses Rades repräsentierender Instabilitätswert wenigstens abhängig von den Drehzahlgrößen gebildet wird und dieser Instabilitätswert mit einem Schwellenwert verglichen wird und die Ansteuerung der Bremseinrichtung dieses Rades abhängig von dem Vergleich getätigt wird.

4. Verfahren nach Anspruch 1, **dadurch gekennzeichnet, daß** die Einstellung der Bremswirkung durch die Einstellung eines hydraulischen Bremsdrucks geschieht und die Erhöhung und Erniedrigung der Bremswirkung **dadurch** erzielt wird, daß durch entsprechende Ansteuerungen (Aij) von Druckventilen der Bremsdruck in den Bremseinrichtung (13a-d) der Räder erhöht und erniedrigt wird, wobei insbesondere vorgesehen ist, daß die Ansteuerungen (Aij) die Zeitdauer eines Bremsdruckaufbaus oder eines Bremsdruckabbaus repräsentieren und dann, wenn die vorgebbare Situation ($\mu_{split}$) erfaßt wird, die Ansteuerung (Aij) der Bremseinrichtungen (13a-d) des Rades (Low-Rad) an der Hinterachse mit dem geringeren Reibwert derart geschieht, daß die Zeitdauer des Bremsdruckabbaus an diesem Rad abhängig von der Zeitdauer des Bremsdruckabbaus an dem seitengleichen Rad an der Vorderachse getätigt wird.

5. Vorrichtung zur Einstellung der Bremswirkung an den Rädern eines Kraftfahrzeugs mit wenigstens einer Hinterachse und einer Vorderachse und jeweils zwei bzgl. der Fahrtrichtung rechts und links angeordneten Rädern (11a-d), denen jeweils eine Bremseinrichtung (13a-d) zur Aufbringung einer Bremswirkung an dem Rad zugeordnet ist, wobei

     - Drehzahlsensoren (12a-d) vorgesehen sind, mittels der Drehzahlgrößen (Nij), die die Drehbewegungen der Räder repräsentieren, erfaßt werden,
     - Mittel (16) vorgesehen sind, mittels der wenigstens abhängig von den erfaßten Drehzahlgrößen (Nij) Ansteuersignale (Aji) zur Ansteuerung der Bremseinrichtungen (13a-d) wenigstens im Sinne einer Erhöhung und einer Erniedrigung der Bremswirkung ermittelt werden, und

- durch die Mittel (16) eine vorgebbare Situation ($\mu_{split}$) wenigstens abhängig von den erfaßten Drehzahlgrößen (Nij) dann erfaßt wird, wenn an den rechten und linken Rädern in bestimmter Weise unterschiedliche Reibwerte vorliegen,

**dadurch gekennzeichnet, dass** die Mittel (16) derart ausgelegt sind, daß dann, wenn die vorgebbare Situation ($\mu_{split}$) erfaßt wird,

- die Ansteuerung (Aij) der Bremseinrichtungen (13a-d) des Rades (Low-Rad) an der Hinterachse, an dem der geringere Reibwert vorliegt, derart geschieht, daß

o die Erniedrigung der Bremswirkung an diesem Rad (Low-Rad) an der Hinterachse abhängig von der Erniedrigung der Bremswirkung an dem seitengleichen Rad an der Vorderachse getätigt wird, oder
o an diesem Rad (Low-Rad) an der Hinterachse keine Bremswirkung eingestellt wird, und

- die Ansteuerung (Aij) der Bremseinrichtungen (13a-d) der Räder (High-Räder) an der Vorder- und Hinterachse, an denen der größere Reibwert vorliegt, derart geschieht, daß ein vorgegebener Bremsschlupf eingestellt wird, wobei insbesondere vorgesehen ist, daß der Bremsschlupf abhängig von den Drehzahlgrößen gebildet wird und der Bremsschlupf mit einem Schwellenwert verglichen wird und die Ansteuerung der Bremseinrichtung dieser Räder (High-Räder) abhängig von dem Vergleich getätigt wird.

6. Vorrichtung nach Anspruch 5, **dadurch gekennzeichnet, daß** zur Einstellung des Bremsschlupfes wenigstens der Bremsschlupf an diesen Rädern (High-Räder) der Vorder- und Hinterachse abhängig von der Drehzahlgröße, die die Drehbewegungen des Rades (Low-Rad) an der Hinterachse mit dem geringeren Reibwert repräsentiert, ermittelt wird, wobei insbesondere vorgesehen ist, daß die Drehzahlgröße, die die Drehbewegungen des Rades (Low-Rad) an der Hinterachse mit dem geringeren Reibwert repräsentiert, bei der Ermittlung des Bremsschlupfes als Fahrzeuggeschwindigkeit beziehungsweise Fahrzeugreferenzgeschwindigkeit herangezogen wird.

7. Vorrichtung nach Anspruch 5, **dadurch gekennzeichnet, daß** dann, wenn die vorgebbare Situation ($\mu_{split}$) erfaßt wird, die Ansteuerung (Aij) der Bremseinrichtungen (13a-d) des Rades (Low-Rad) an der Vorderachse mit dem geringeren Reibwert derart geschieht, daß ein Blockieren dieses Rades verhindert wird, wobei insbesondere vorgesehen ist, daß ein die Dynamik dieses Rades repräsentierender Instabilitätswert wenigstens abhängig von den Drehzahlgrößen gebildet wird und dieser Instabilitätswert mit einem Schwellenwert verglichen wird und die Ansteuerung der Bremseinrichtung dieses Rades abhängig von dem Vergleich getätigt wird.

8. Vorrichtung nach Anspruch 5, **dadurch gekennzeichnet, daß** die Einstellung der Bremswirkung durch die Einstellung eines hydraulischen Bremsdrucks geschieht und die Erhöhung und Erniedrigung der Bremswirkung **dadurch** erzielt wird, daß durch entsprechende Ansteuerungen (Aij) von Druckventilen der Bremsdruck in den Bremseinrichtung (13a-d) der Räder erhöht und erniedrigt wird, wobei insbesondere vorgesehen ist, daß die Ansteuerungen (Aij) die Zeitdauer eines Bremsdruckaufbaus oder eines Bremsdruckabbaus repräsentieren und dann, wenn die vorgebbare Situation ($\mu_{split}$) erfaßt wird, die Ansteuerung (Aij) der Bremseinrichtungen (13a-d) des Rades (Low-Rad) an der Hinterachse mit dem geringeren Reibwert derart geschieht, daß die Zeitdauer des Bremsdruckabbaus an diesem Rad abhängig von der Zeitdauer des Bremsdruckabbaus an dem seitengleichen Rad an der Vorderachse getätigt wird.

## Claims

1. Method for adjusting the braking effect at the wheels of a motor vehicle having at least one rear axle and one front axle and in each case two wheels (11a - d) which are arranged on the right and the left with respect to the direction of travel and to each of which a brake device (13a - d) for applying a braking effect at the wheel is assigned, wherein

- rotation speed variables (Nij) which represent the rotational movement of the wheels are detected,
- actuation signals (Aij) for actuating the brake devices (13a - d) at least in the sense of increasing and/or decreasing the braking effect are determined as a function of the detected rotational speed variables (Nij), and
- a predefinable situation ($\mu_{split}$) is detected, at least as a function of the detected rotational speed variables (Nij), if different coefficients of friction are present at the right-hand and left-hand wheels in a specific way,

**characterized in that** if the predefinable situation ($\mu_{split}$) is detected,

- the actuation (Aij) of the brake devices (13a - d) of the wheel (low wheel) at the rear axle at which the relatively low coefficient of friction is present occurs in such a way that

○ the decreasing of the braking effect at this wheel (low wheel) at the rear axle is carried out as a function of the decreasing of the braking effect at the wheel on the same side on the front axle, or
○ no braking effect is set at this wheel (low wheel) at the rear axle, and

- the actuation (Aij) of the brake devices (13a - d) of the wheels (high wheels) at the front axle and rear axle at which the relatively large coefficient of friction is present occurs in such a way that a predefined brake slip is set, wherein there is in particular provision that the brake slip is formed as a function of the rotational speed variables, and the brake slip is compared with a threshold value, and the actuation of the brake devices of these wheels (high wheels) is carried out as a function of the comparison.

2. Method according to Claim 1, **characterized in that**, in order to set the brake slip at least the brake slip at these wheels (high wheels) of the front axle and rear axle is determined as a function of the rotational speed variable which represents the rotational movements of the wheel (low wheel) at the rear axle with the relatively low coefficient of friction, wherein there is in particular provision that the rotational speed variable which represents the rotational movements of the wheel (low wheel) at the rear axle with the relatively low coefficient of friction is used in the determination of the brake slip as the vehicle speed or vehicle reference speed.

3. Method according to Claim 1, **characterized in that** if the predefinable situation ($\mu_{split}$) is detected, the actuation (Aij) of the brake devices (13a - d) of the wheel (low wheel) at the font axle occurs with the relatively low coefficient of friction in such a way that locking of this wheel is prevented, wherein there is in particular provision that an instability value which represents the dynamics of this wheel is formed at least as a function of the rotational speed variables and this instability value is compared with a threshold value, and the actuation of the brake device of this wheel is carried out as a function of the comparison.

4. Method according to Claim 1, **characterized in that** the braking effect is set by setting a hydraulic braking pressure, and the increasing and decreasing of the braking effect is achieved by virtue of the fact that the brake pressure in the brake devices (13a - d) of the wheels is increased and decreased by corresponding actuations (Aij) of pressure valves, wherein in particular there is provision that the actuations (Aij) represent the time period of an increase in the braking pressure or a decrease in the braking pressure, and when the predefinable situation ($\mu_{split}$) is detected the brake devices (13a - d) of the wheel (low wheel) at the rear axle are actuated with the relatively low coefficient of friction in such a way that the time period of the decrease in brake pressure at this wheel is implemented as a function of the time period of the decrease in brake pressure at the wheel on the same side on the front axle.

5. Device for adjusting the braking effect at the wheels of a motor vehicle having at least one rear axle and one front axle and in each case two wheels (11a - d) which are arranged on the right and the left with respect to the direction of travel and to each of which a brake device (13a - d) for applying a braking effect at the wheel is assigned, wherein

- rotational speed sensors (12a-d) are provided, by mean of which the rotational speed variables (Nij) which represent the rotational movement of the wheels are detected,
- means (16) are provided, by means of which the actuation signals (Aij) for actuating the brake devices (13a - d) at least in the sense of increasing and decreasing the braking effect are determined at least as a function of the detected rotational speed variables (Nij), and
- a predefinable situation ($\mu_{split}$) is detected by the means (16), at least as a function of the detected rotational speed variables (Nij), if different coefficients of friction are present at the right-hand and left-hand wheels in a specific way,

**characterized in that** the means (16) are designed in such a way, that if the predefinable situation ($\mu_{split}$) is detected,

- the actuation (Aij) of the brake devices (13a - d) of the wheel (low wheel) at the rear axle at which the relatively low coefficient of friction is present occurs in such a way that

˚ the decreasing of the braking effect at this wheel (low wheel) at the rear axle is carried out as a function of the decreasing of the braking effect at the wheel on the same side on the front axle, or
˚ no braking effect is set at this wheel (low wheel) at the rear axle, and

- the actuation (Aij) of the brake devices (13a - d) of the wheels (high wheels) at the front axle and rear axle at which the relatively large coefficient of friction is present occurs in such a way that a predefined brake slip is set, wherein there is in particular provision that the brake slip is formed as a function of the rotational speed variables, and the brake slip is compared with a threshold value, and the actuation of the brake devices of these wheels (high wheels) is carried out as a function of the comparison.

6.  Device according to Claim 5, **characterized in that**, in order to set the brake slip at least the brake slip at these wheels (high wheels) of the front axle and rear axle is determined as a function of the rotational speed variable which represents the rotational movements of the wheel (low wheel) at the rear axle with the relatively low coefficient of friction, wherein there is in particular provision that the rotational speed variable which represents the rotational movements of the wheel (low wheel) at the rear axle with the relatively low coefficient of friction is used in the determination of the brake slip as the vehicle speed or vehicle reference speed.

7.  Device according to Claim 5, **characterized in that** if the predefinable situation ($\mu_{split}$) is detected, the actuation (Aij) of the brake devices (13a - d) of the wheel (low wheel) at the front axle occurs with the relatively low coefficient of friction in such a way that locking of this wheel is prevented, wherein there is in particular provision that an instability value which represents the dynamics of this wheel is formed at least as a function of the rotational speed variables and this instability value is compared with a threshold value, and the actuation of the brake device of this wheel is carried out as a function of the comparison.

8.  Device according to Claim 5, **characterized in that** the braking effect is set by setting a hydraulic braking pressure, and the increasing and decreasing of the braking effect is achieved by virtue of the fact that the brake pressure in the brake devices (13a - d) of the wheels is increased and decreased by corresponding actuations (Aij) of pressure valves, wherein in particular there is provision that the actuations (Aij) represent the time period of an increase in the braking pressure or a decrease in the braking pressure, and when the predefinable situation ($\mu_{split}$) is detected the brake devices (13a - d) of the wheel (low wheel) at the rear axle are actuated with the relatively low coefficient of friction in such a way that the time period of the decrease in brake pressure at this wheel is implemented as a function of the time period of the decrease in brake pressure at the wheel on the same side on the front axle.

**Revendications**

1.  Procédé de réglage de l'action de freinage sur les roues d'un véhicule automobile qui présente au moins un essieu arrière et un essieu avant ainsi que deux roues (11a-d) situées respectivement à droite et à gauche de la direction de déplacement et à chacune desquelles est associé un dispositif de freinage (13a-d) qui applique une action de freinage sur la roue, dans lequel

  - des grandeurs (Nij) de vitesse de rotation qui représentent les déplacements de rotation des roues sont détectées,
  - des signaux de commande (Aij) qui commandent les dispositifs de freinage (13a-d) au moins dans le sens d'une augmentation ou d'un abaissement de l'action de freinage sont déterminés au moins en fonction des grandeurs (Nij) de vitesse de rotation détectées et
  - une situation prédéterminable ($\mu_{split}$) est détectée au moins en fonction des grandeurs (Nij) de vitesse de rotation détectées si des valeurs de frottement différentes prévalent d'une manière déterminée sur les roues gauches et les roues droites,

**caractérisé en ce que**
lorsque la situation prédéterminable ($\mu_{split}$) est détectée:

  - la commande (Aij) a lieu sur le dispositif de freinage (13a-d) de la roue de l'essieu arrière sur laquelle une plus petite valeur de frottement prévaut (roue dite "basse"), de telle sorte que

    la diminution de l'action de freinage sur cette roue de l'essieu arrière (roue dite "basse") est réalisée en fonction de la diminution de l'action de freinage sur la roue située du même côté sur l'essieu avant ou
    aucune action de freinage n'est appliquée sur cette roue de l'essieu arrière (roue dite "basse") et

  - la commande (Aij) des dispositifs de freinage (13a-d) des roues de l'essieu avant et de l'essieu arrière sur lesquelles une plus grande valeur de frottement prévaut (roues dites "hautes") s'effectue en établissant un glissement prédéterminé de freinage, en formant en particulier le glissement de freinage en fonction des grandeurs de vitesse de rotation et en comparant le glissement de freinage à une valeur de seuil, la commande du dispositif de freinage de ces roues (roues dites "hautes") étant exercée en fonction de la comparaison.

2.  Procédé selon la revendication 1, **caractérisé en ce que** pour régler le glissement de freinage, au moins le glissement de freinage sur ces roues (roues dites "hautes") de l'essieu avant et de l'essieu arrière est déterminé en fonction de la grandeur de vitesse de rotation qui représente les déplacements de rotation de la roue de l'essieu arrière qui présente une plus petite valeur de frottement (roue dite "basse"), en faisant en particulier intervenir comme vitesse du véhicule ou vitesse de référence du véhicule la grandeur de vitesse de rotation qui représente les déplacements de rotation de la roue de l'essieu arrière qui présente une plus basse valeur de frottement (roue dite "basse") dans la détermination du glissement de freinage.

3. Procédé selon la revendication 1, **caractérisé en ce que** lorsque la situation prédéterminable ($\mu_{split}$) est détectée, la commande (Aij) des dispositifs de freinage (13a-d) de la roue de l'essieu avant qui présente une plus petite valeur de frottement (roue dite "basse") s'effectue en empêchant le blocage de cette roue, en formant en particulier une valeur d'instabilité qui représente la dynamique de cette roue au moins en fonction des grandeurs de vitesse de rotation et en comparant cette valeur d'instabilité à une valeur de seuil, la commande du dispositif de freinage de cette roue étant exercée en fonction de la comparaison.

4. Procédé selon la revendication 1, **caractérisé en ce que** le réglage de l'action de freinage s'effectue par ajustement d'une pression hydraulique de freinage et **en ce que** l'augmentation ou la diminution de l'action de freinage sont obtenues en augmentant et en abaissant par des commandes (Aij) appropriées de soupapes de pression la pression de freinage dans le dispositif de freinage (13a-d) des roues, **en ce que** les commandes (Aij) représentent en particulier la durée de l'établissement d'une pression de freinage ou une disparition de la pression de freinage et **en ce que** lorsque la situation prédéterminable ($\mu_{split}$) est détectée, la commande (Aij) des dispositifs de freinage (13a-d) de la roue de l'essieu arrière qui présente une plus petite valeur de frottement (roue dite "basse") s'effectue en commandant la durée de la diminution de pression de freinage sur cette roue en fonction de la durée de la diminution de la pression de freinage sur la roue située du même côté sur l'essieu avant.

5. Dispositif de réglage de l'action de freinage sur les roues d'un véhicule automobile qui présente au moins un essieu arrière et un essieu avant ainsi que deux roues (11a-d) situées respectivement à droite et à gauche de la direction de déplacement et à chacune desquelles est associé un dispositif de freinage (13ad) qui applique une action de freinage sur la roue, dans lequel

   - des détecteurs (12a-d) de vitesse de rotation sont prévus pour détecter des grandeurs (Nij) de vitesse de rotation qui représentent les déplacements de rotation des roues,
   - des moyens (16) sont prévus pour déterminer des signaux de commande (Aji) qui commandent au moins en fonction des grandeurs (Nij) de vitesse de rotation détectées des dispositifs de freinage (13a-d) au moins dans le sens d'une augmentation ou d'une diminution de l'action de freinage et
   - les moyens (16) détectent une situation prédéterminable ($\mu_{split}$) au moins en fonction des grandeurs (Nij) de vitesse de rotation détectées si des valeurs de frottement différentes prévalent d'une manière définie sur les roues droites et les roues gauches,

**caractérisé en ce que**
les moyens (16) sont conçus de telle sorte que lorsque la situation prédéterminable ($\mu_{split}$) est détectée:

   - la commande (Aij) a lieu sur le dispositif de freinage (13a-d) de la roue de l'essieu arrière sur laquelle une plus petite valeur de frottement prévaut (roue dite "basse"), de telle sorte que

      la diminution de l'action de freinage sur cette roue de l'essieu arrière (roue dite "basse") est réalisée en fonction de la diminution de l'action de freinage sur la roue située du même côté sur l'essieu avant ou
      aucune action de freinage n'est appliquée sur cette roue de l'essieu arrière (roue dite "basse") et

   - la commande (Aij) des dispositifs de freinage (13a-d) des roues de l'essieu avant et de l'essieu arrière sur lesquelles une plus grande valeur de frottement prévaut (roues dites "hautes") s'effectue en établissant un glissement prédéterminé de freinage, en formant en particulier le glissement de freinage en fonction des grandeurs de vitesse de rotation et en comparant le glissement de freinage à une valeur de seuil, la commande du dispositif de freinage de ces roues (roues dites "hautes") étant exercée en fonction de la comparaison.

6. Dispositif selon la revendication 5, **caractérisé en ce que** pour régler le glissement de freinage, au moins le glissement de freinage sur ces roues de l'essieu avant et de l'essieu arrière (roues dites "hautes") est déterminé en fonction de la grandeur de vitesse de rotation qui représente les déplacements de rotation de la roue de l'essieu arrière qui présente une plus petite valeur de frottement (roue dite "basse"), en faisant en particulier intervenir comme vitesse du véhicule ou vitesse de référence du véhicule la grandeur de vitesse de rotation qui représente les déplacements de rotation de la roue de l'essieu arrière qui présente une plus basse valeur de frottement (roue dite "basse") dans la détermination du glissement de freinage.

**7.** Dispositif selon la revendication 5, **caractérisé en ce que** lorsque la situation prédéterminable ($\mu_{split}$) est détectée, la commande (Aij) des dispositifs de freinage (13a-d) de la roue de l'essieu avant qui présente une plus petite valeur de frottement (roue dite "basse") s'effectue en empêchant le blocage de cette roue, en formant en particulier une valeur d'instabilité qui représente la dynamique de cette roue au moins en fonction des grandeurs de vitesse de rotation et en comparant cette valeur d'instabilité à une valeur de seuil, la commande du dispositif de freinage de cette roue étant exercée en fonction de la comparaison.

**8.** Dispositif selon la revendication 5, **caractérisé en ce que** le réglage de l'action de freinage s'effectue par ajustement d'une pression hydraulique de freinage et **en ce que** l'augmentation ou la diminution de l'action de freinage sont obtenues en augmentant et en abaissant par des commandes (Aij) appropriées de soupapes de pression la pression de freinage dans le dispositif de freinage (13a-d) des roues, **en ce que** les commandes (Aij) représentent en particulier la durée de l'établissement d'une pression de freinage ou une disparition de la pression de freinage et **en ce que** lorsque la situation prédéterminable ($\mu_{split}$) est détectée, la commande (Aij) des dispositifs de freinage (13a-d) de la roue de l'essieu arrière qui présente une plus petite valeur de frottement (roue dite "basse") s'effectue en commandant la durée de la diminution de pression de freinage sur cette roue en fonction de la durée de la diminution de la pression de freinage sur la roue située du même côté sur l'essieu avant.

11a    12a    14a              14b    12b    11b

Nvl                    Nvr

Avl                    Avr

13a                    13b

15a                    15b

16

15c                    15d

13c                    13d

Ahl                    Ahr

Nhl                    Nhr

11c    12c    14c              14d    12d    11d

# FIG. 1

**FIG. 2**

```
                    ( Start )────── 21

                        │
                        ▼
                   ┌─────────┐
                   │  Lese   │────── 22
                   │Nij, Aij │
                   └─────────┘
                        │
                        ▼
                      ◇               N
           23 ──── ◇ μ-split? ◇ ──────────┐
                      ◇                    │
                        │                  │
                        │ J                │
                        ▼                  │
        ┌────────────────────────────────┐│
        │                     ^           ││
        │ High-Rad VA         = λ-Regelung││
        │                     ^           ││
24 ──── │ High-Rad HA         = λ-Regelung││
        │                     ^           ││
        │ Low-Rad VA          = Instabili-││
        │                        täts-    ││
        │                        Regelung ││
        │                     ^           ││
        │ Low-Rad HA          = Modifizier-││
        │                        te       ││
        │                        Instabili-││
        │                        täts-    ││
        │                        Regelung ││
        └────────────────────────────────┘│
                        │                  │
                        ●──────────────────┘
                        │
                        ▼
                    ( Ende )
          25 ───────
```

FIG. 3

**EP 1 101 675 B1**

**IN DER BESCHREIBUNG AUFGEFÜHRTE DOKUMENTE**

**In der Beschreibung aufgeführte Patentdokumente**

- US 4637664 A